# EUROPEAN PATENT SPECIFICATION

(11) **EP 1 847 725 B1**
(45) Date of publication and mention of the grant of the patent: **12.08.2015**
(21) Application number: 06112909.4
(22) Date of filing: 21.04.2006
(51) Int. Cl.: F16C 19/18, F16C 33/40, F16C 33/41

(54) **Comb-shaped cage for a ball row of a two row angular contact ball bearing**
Kammkäfig für eine Kugelreihe eines zweireihigen Schrägkugellagers
Cage à doigts pour une rangée de billes d'un roulement à billes à contact oblique à deux rangées

(43) Date of publication of application: 24.10.2007
(73) Proprietor: Aktiebolaget SKF, 415 50 Göteborg (SE)
(72) Inventor: Serafini, Andrea, 10064 Pinerolo (Torino) (IT); Maldera, Carlo, 10094 Giaveno (Torino) (IT)
(74) Representative: Tedeschini, Luca

(56) References cited:
- EP-A1- 0 592 839
- DE-A1- 19 634 483
- DE-C- 252 779
- FR-A1- 2 665 231
- GB-A- 216 350
- US-A- 3 366 429
- US-A- 3 980 359

## Description

The present invention refers to an angular contact ball bearing with cages for bearing balls. This invention is applicable to bearing units having a dual row of balls.

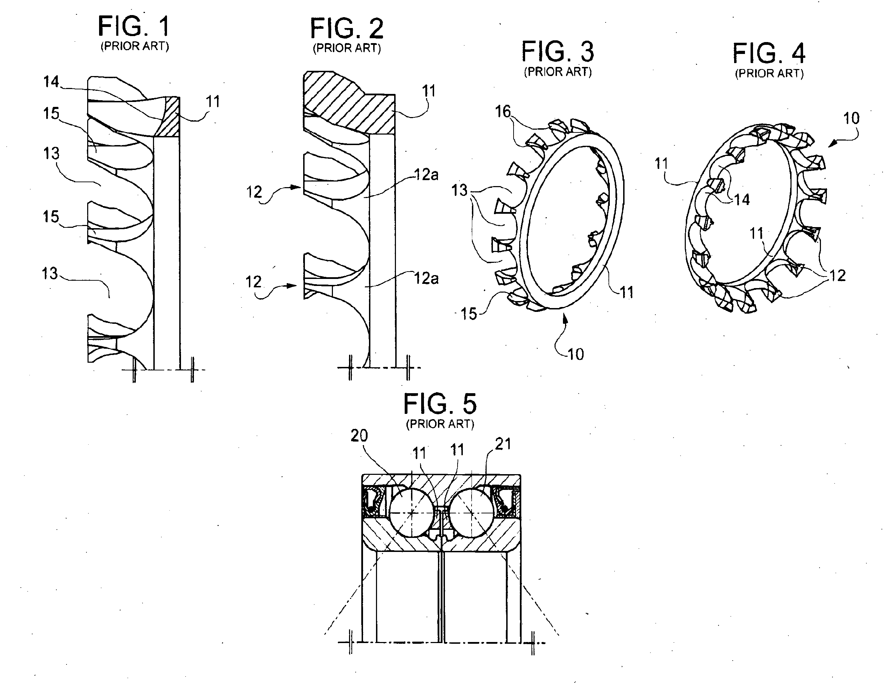

For a better understanding of state of the art and problems related thereto, there will at first be described a retaining cage of known type. With reference to figures 1-5, a conventional cage 10 is formed by a circular base rib 11 and a plurality of circumferentially equally spaced fingers 12 extending from one side of the rib 11. The base rib 11 and the fingers 12 have partially spherical concave surfaces 14, 15, 16, together defining a plurality of partially spherical pockets or cavities 13 for retaining respective balls (20 or 21, figure 5) .

The rib 11 is a continuous structural element which extends circumferentially along the cage and constitutes a solid base so as to give the cage as a whole the stiffness necessary for retaining the balls of each row circumferentially equally spaced along the raceways of a bearing.

In a bearing having a dual row of balls (figure 5), the ribs 11 of the two cages are locates side to side with a small axial clearance therebetween. In many applications, a bearing of this kind is required to be axially compact. To this end, it has been proposed in the past to manufacture a single cage forming two rows of pockets on its opposite sides for two respective rows of balls. Although it achieves a reduction of the axial bulk, owing to the presence of a single rib instead of two, such a cage has not given satisfactory results. As known to those skilled in the art, under certain working conditions the two rows of balls of a bearing of the above kind roll at different speeds due to nonsymmetrical loads acting on the bearing. In these conditions, the aforementioned single cage forces the two rows of balls to rotate at the same speed. As a result, an excessive contact (and therefore friction) occurs between the balls and the pockets of the cage. In the long term, this causes the pocket surfaces to melt.

Still in order to bring the two rows of balls axially nearer to one another, there have been proposed in FR-A-2 665 231 and EP-B-1 132 635 separate cages for the two rows of balls, wherein the pockets of one cage are angularly offset with respect to the pockets of the other cage. Although this arrangement initially allows a limited relative circumferential movement between the two rows of balls when one of them tends to rotate faster than the other, it can not avoid the same drawback adversely affecting the above-mentioned single cage.

The angular contact ball bearing disclosed in FR-A-2 665 231 has the features defined in the preamble of claim 1. Known from DE-A-196 34 483 is a cage having a circular rib which extends circumferentially in a radially inner position with respect to the root portions of the fingers defining the spherical pockets for retaining the balls. That rib does not axially protrude appreciably beyond a radial plane (P) tangent to the spherical surfaces of the ball retaining pockets.

It is a general object of the invention to provide an improved cage having a particularly low axial bulk. A particular object of the invention is to provide a cage which allows to bring the two rows of balls in an angular contact bearing having a dual row of balls nearer to one another, and thereby manufacture an axially compact bearing, but without incurring the drawbacks of the above-discussed prior art.

These objects are achieved, according to the invention, by a ball bearing as defined in claim 1.

A preferred, but not limiting embodiment of the invention will now be described, reference being made to the accompanying drawings, in which:
figures 1 and 2 are axial cross-sectional views of a conventional ball bearing cage;
figures 3 and 4 are perspective views showing the two opposite sides of the cage of figures 1 and 2;
figure 5 is a partial axial cross-sectional view of a ball bearing equipped with two ball retaining cages according to figures 1-4;
figure 6 is an axial cross-sectional view of a ball bearing equipped with two cages according to the invention;
figures 7 and 8 are perspective views showing the two opposite sides of a cage according to the invention;
figure 9 is a side view of the cage of figures 7 and 8; and figure 10 is an axial cross-sectional view taken along the line X-X in figure 9.

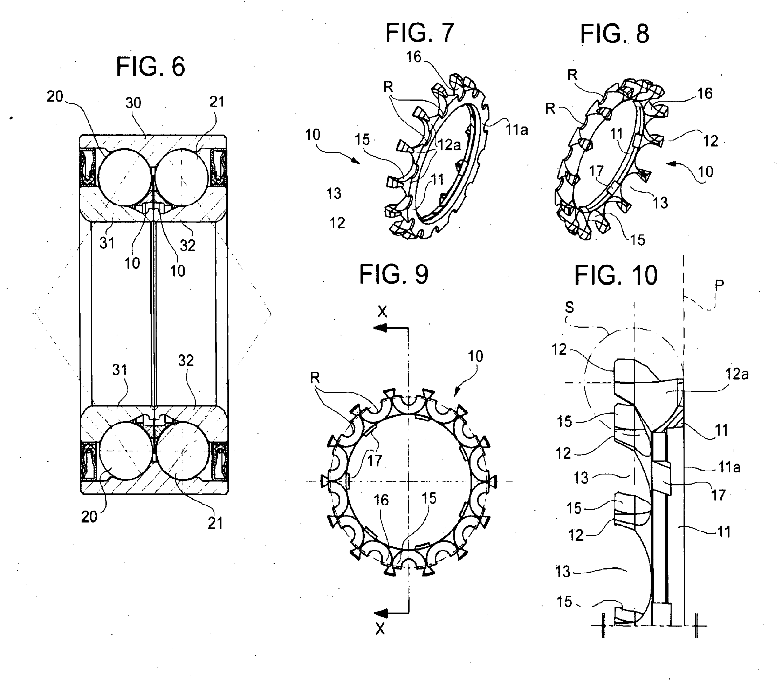

Referring now to figure 6, a ball bearing unit comprises an outer stationary race 30, two rotatable inner races 31, 32, two rows of balls 20, 21 and two respective annular cages 10 for the balls. In the example shown in figure 6, the bearing unit is of the so called I generation, i.e. having non-flanged races. Those skilled in the art will recognize that the invention is equally applicable to bearing units of the II and III generations, with one or more flanged races. It will also be apparent that the cage described below may be applied also to bearings having a single row of balls (for instance the so-called "deep groove ball bearings") not in accordance with the invention.

As shown in figures 7-10, each cage 10 forms a plurality of circumferentially equally spaced curved fingers 12 having concave surfaces 15, 16 which together define a plurality of pockets or cavities 13. Each pocket 13 is defined by the facing surfaces 15, 16 of two consecutive fingers, and forms part of a substantially spherical surface S for retaining a respective ball 20 (or 21) circumferentially equally spaced from the adjacent balls belonging to the same row of balls. For the purpose of implementing the invention, it is irrelevant whether the concave surfaces 15, 16 have such an extent as to be able to retain the balls during the manipulating steps while assembling the bearing (so-called self-retaining cages).

Indicated P is a geometric plane tangent to the spherical surfaces S of the pockets 13 on that side of the cage which, in the assembled condition (figure 6), is facing towards the radial mid-plane M of the bearing.

The fingers 12 project from one side of the cage starting from root portions 12a joined by a circular rib 11 that constitute the radially innermost part of the annular structure of the cage and which, differently from the rib of the conventional cage show in figures 1-4, does not appreciably protrude axially beyond the tangent plane P of the spherical surfaces S. In the example shown in figures 6-10, the side 11a, herein defined "axially inner" side of the rib 11, is substantially coincident with the tangential plane P. Owing to this arrangement, as can be noticed by comparing the cages of figures 1-4 and 7-10, in the cage of figures 7-10 there are no surfaces such as those indicated 14 which concurred to define the pockets in a conventional cage. In place of the surfaces 14, the cages of the bearing according to the invention have semicircular recesses R located between two consecutive root portions 12a and in a radially outer position with respect to the circular rib 11. The recesses R allow the balls of the two rows of balls to be brought axially nearer to each other.

Reference number 17 designates optional retaining teeth that may serve to position the cages on the inner bearing races.

As will be appreciated, the new shape of the cage allows to shorten the overall axial dimension of the bearing unit. Furthermore, since the two rows of balls 20, 21 are rotationally independent from one another, and therefore free to rotate at different speeds around the axis of rotation x of the bearing unit, the drawbacks discussed in the introductory part of the description are avoided.

Moreover, the cage itself may also be used advantageously in a bearing unit having a single row of balls. Owing to the reduced axial bulk of the cage, also the axial dimension of the bearing races can be reduced. Additionally or alternatively, the axially narrow cage leaves a free space at the side of the cage which may be used for locating an encoder or a transducer or sensor, for example, in order to detect rotation or other parameters concerning the operation of the bearing (for instance temperature, vibration, loads, humidity) or to fit a tag reporting data concerning the bearing.

## Claims

1. An angular contact ball bearing for the hub of a motor vehicle, having two rows of balls (20, 21), each row being associated with a respective cage (10), each cage having
a plurality of circumferentially equally spaced fingers (12) extending from a first side of the cage, the fingers having concave surfaces (15, 16) forming a corresponding plurality of pockets or cavities (13) for respective balls (20 or 21),
each pocket (13) being defined by the concave facing surfaces (15, 16) of two consecutive fingers (12) and being part of a substantially spherical surface (S),
the fingers (12) having root portions (12a) joined by a continuous circular rib (11)
**characterized in that**
the circular rib (11) extends circumferentially in a radially inner position with respect to the root portions (12a) and does not axially protrude appreciably beyond a radial plane (P) tangent to the spherical surfaces (S) on a second side of the cage opposite to the first side,
each cage has recesses (R) open in radially outward directions and located between two consecutive root portions (12a) and at a radially outer position with respect to the circular rib (11),
each circular rib (11) on the second side of the relevant cage has a face (11a) substantially coincident with the relevant tangential plane (P), and that
the faces (11a) on said second sides of the two cages are facing each other.

## Patentansprüche

1. Schrägkugellager für die Nabe eines Kraftfahrzeugs, das zwei Reihen Kugeln (20, 21) aufweist, wobei jede Reihe einem jeweiligen Käfig (10) zugeordnet ist, wobei jeder Käfig eine Mehrzahl von über den Umfang gleichmäßig beabstandeten Fingern (12) aufweist, die sich von einer ersten Seite des Käfigs erstrecken, wobei die Finger konkave Flächen (15, 16) aufweisen, die eine entsprechende Mehrzahl von Ausnehmungen oder Hohlräumen (13) für jeweilige Kugeln (20 oder 21) bilden,
wobei jede Ausnehmung (13) durch die konkaven zugewandten Flächen (15, 16) von zwei aufeinanderfolgenden Fingern (12) definiert wird und Teil einer im Wesentlichen sphärischen Fläche (S) ist,
wobei die Finger (12) Fußabschnitte (12a) aufweisen, die durch eine durchgehende kreisförmige Rippe (11) verbunden sind,
**dadurch gekennzeichnet, dass**
sich die kreisförmige Rippe (11) über den Umfang hinweg in einer radial innen liegenden Position bezüglich der Fußabschnitte (12a) erstreckt und axial nicht merklich über eine radiale Ebene (P) hinaus vorsteht, die die sphärischen Flächen (S) auf einer der ersten Seite gegenüberliegenden zweiten Seite des Käfigs tangiert,
wobei jeder Käfig Vertiefungen (R) aufweist, die in radial nach außen verlaufenden Richtungen offen sind und zwischen zwei aufeinanderfolgenden Fußabschnitten (12a) und in einer radial außen liegenden Position bezüglich der kreisförmigen Rippe (11) angeordnet sind,
wobei jede kreisförmige Rippe (11) auf der zweiten Seite des relevanten Käfigs eine Seite (11a) aufweist, die mit der relevanten Tangentialebene (P) im Wesentlichen koinzident ist, und dass die Seite (11a) auf den zweiten Seiten der beiden Käfige einander zugewandt sind.

## Revendications

1. Roulement à billes à contact oblique pour le moyeu d'un véhicule à moteur, comportant deux rangées de billes (20, 21), chaque rangée étant associée à une cage respective (10), chaque cage comportant une pluralité de doigts (12) équidistants sur la circonférence s'étendant à partir d'un premier côté de la cage, les doigts comportant des surfaces concaves (15, 16) formant une pluralité correspondante d'alvéoles ou cavités (13) pour des billes respectives (20 ou 21),
chaque alvéole (13) étant défini par les surfaces concaves (15, 16) en regard de deux doigts consécutifs (12) et faisant partie d'une surface essentiellement sphérique (S),
les doigts (12) comportant des parties racine (12a) reliées par une nervure circulaire (11) continue
**caractérisé en ce que**
la nervure circulaire (11) s'étend sur la circonférence dans une partie radialement intérieure par rapport aux parties racine (12a) et ne fait pas saillie axialement de façon notable au-delà d'un plan radial (P) tangent aux surfaces sphériques (S) sur un second côté de la cage opposé au premier côté,
chaque cage comporte des évidements (R) ouverts dans des directions radialement vers l'extérieur et situés entre deux parties racine (12a) consécutives et à une position radialement extérieure par rapport à la nervure circulaire (11),
chaque nervure circulaire (11) sur le second côté de la cage en question comporte une face (11a) coïncidant essentiellement avec le plan tangent (P) en question, et **en ce que**
les faces (11a) sur lesdits seconds côtés des deux cages sont disposées en regard l'une de l'autre.
